# FASCICULE DE BREVET EUROPEEN

(11) **EP 3 034 363 B1**
(45) Date de publication et mention de la délivrance du brevet: **12.06.2019**
(21) Numéro de dépôt: 15199321.9
(22) Date de dépôt: 10.12.2015
(51) Int. Cl.: B60R 22/22, B60R 22/24

(54) **SUPPORT D'ENROULEUR DE CEINTURE DE SECURITE ARRIERE COMPRENANT UNE TABLETTE DISPOSANT D'UN RENFORT RAPPORTE**
HALTERUNG FÜR HINTEREN SICHERHEITSGURTAUFROLLER, DIE EINE PLATTE MIT EINER ANGEFÜGTEN VERSTEIFUNG UMFASST
WINDER HOLDER FOR REAR SEATBELT COMPRISING A SHELF WITH ADDED REINFORCEMENT

(30) Priorité: 19.12.2014 FR 1462961
(43) Date de publication de la demande: 22.06.2016
(73) Titulaire: Renault S.A.S., 92100 Boulogne-Billancourt (FR)
(72) Inventeur: LEFEBVRE, Benjamin, 91470 Les Molieres (FR); GOERES, Jean-Marie, 78530 Buc (FR)

(56) Documents cités:
- EP-A1- 2 181 899
- FR-A1- 2 971 756
- FR-A1- 2 991 259
- GB-A- 2 315 983

## Description

La présente invention concerne un support recevant un enrouleur de ceinture de sécurité, prévu pour être fixé à l'arrière de la caisse d'un véhicule, ainsi qu'un véhicule automobile équipé de tels supports.

Les véhicules automobiles comportent généralement à chaque place des ceintures de sécurité disposant d'un enrouleur automatique équipé d'un ressort qui enroule la sangle quand elle est libérée, de boucles de passage de cette sangle pour guider son parcours, et d'un crochet s'engageant dans un verrou correspondant pour verrouiller cette ceinture sur le passager.

L'enrouleur automatique comporte des dispositifs bloquant automatiquement le déroulage de la sangle dans différents cas causés par un accident, comprenant notamment une traction très rapide sur la sangle, une très forte décélération du véhicule ou son inclinaison trop importante.

Un type de support connu recevant un enrouleur de ceinture de sécurité pour les places arrière, présenté notamment par le document FR-B1-2862034, comporte une tablette formée par une tôle disposée horizontalement, comprenant un pli latéral extérieur par rapport à l'axe longitudinal du véhicule, qui est soudé par points sur une tôle latérale de doublure de custode, et une partie arrière soudée aussi par points sur le montant arrière de la caisse qui encadre l'ouverture recevant le hayon.

L'enrouleur de ceinture de sécurité fixé à l'avant de la tablette, doit résister à des efforts de traction important qui s'appliquent sur la sangle lors d'un accident.

En particulier la tablette doit éviter lors des tests imposés par les normes de résistance des ceintures de sécurité, certaines déformations qui pourraient la cintrer ou la plier, entraînant une mauvaise répartition des efforts de traction sur les différents points de soudure la reliant à la caisse du véhicule. En effet, on obtient alors dans ce cas un risque de pelage au niveau des points de soudure, qui fait que la traction s'applique d'une manière anormale sur ces points en entraînant un risque de rupture. Le « pelage » correspond à une forme de « décollement » des pièces assemblées dans la zone du point de soudure. Le pelage est l'un des trois modes de sollicitation d'un point de soudure avec l'arrachement et le cisaillement.

Il est connu du document EP-2181899-A1 un support d'enrouleur de ceinture de sécurité arrière, comprenant une tablette formée par une tôle allongée suivant la direction longitudinale du véhicule, prévue pour être disposée sensiblement horizontalement dans ce véhicule, comportant un pli latéral extérieur prévu pour être fixé sur une tôle de doublure de custode de la caisse de ce véhicule, une partie arrière prévue pour être fixée sur un montant arrière de cette caisse, et des perçages de fixation de l'enrouleur.

Un tel support a pour inconvénient un agencement sur le plancher du véhicule, ce qui limite d'autant toute intégration de fonction.

La présente invention a notamment pour but d'éviter ces inconvénients de la technique antérieure.

Elle propose à cet effet que le support le support comporte un renfort rapporté qui est fixée sur la tablette et que la tablette comporte sur le côté latéral intérieur une patte sensiblement verticale formée par une découpe de cette tablette, prévue pour recevoir un organe de commande de rabattage d'un siège ou dossier arrière du véhicule.

Une telle patte permet de rendre actionnable l'organe de commande notamment depuis le coffre arrière. On obtient ainsi une patte réalisée de manière économique, qui n'a pas besoin d'être rapportée

Un avantage de ce support d'enrouleur est qu'en gardant un type de tablette existant, pouvant comporter une épaisseur de tôle relativement mince, et en fixant dessus le renfort, qui peut être rapporté à différents endroits suivant l'espace disponible dans le véhicule, on rigidifie de manière importante cette tablette en évitant qu'elle se courbe notamment dans le plan transversal.

La tablette ainsi renforcée subit peu de déformation lors d'une traction importante sur l'enrouleur, ce qui permet de garder une bonne répartition de cette charge sur l'ensemble des points de soudure fixant la tablette sur la caisse du véhicule, et évite leur rupture par une charge trop importante concentrée dessus.

Le support d'enrouleur suivant l'invention peut de plus comporter une ou plusieurs des caractéristiques suivantes, qui peuvent être combinées entre elles.

Avantageusement, le renfort rapporté est fixé sensiblement transversalement sur la tablette. On évite ainsi un pliage de la section transversale de cette tablette.

Avantageusement, le renfort rapporté a la forme générale d'un profilé ou d'une cornière à section transversale en L dont une branche est soudée par points sur la tablette. Ce procédé permet de réaliser de manière économique ce renfort.

Dans ce cas, avantageusement le renfort rapporté comporte une aile longitudinale pliée. On obtient de cette manière facilement un renfort comportant une rigidité importante.

En particulier, le renfort rapporté peut comporter une extrémité pliée qui est fixée sur un pli de la tablette. On augmente de cette manière la rigidité de cette tablette.

La patte peut être disposée sensiblement dans le plan d'un pli latéral intérieur de la tablette.

Avantageusement, le renfort rapporté est disposé à proximité de la découpe de la tablette, un peu en avant ou en arrière de cette découpe. On renforce ainsi de manière importante la tablette dans une zone où elle est plus fragile.

En particulier, la tablette peut être réalisée dans une tôle d'acier d'épaisseur 1,5mm. Cette épaisseur réduite par rapport à celle utilisée couramment, peut donner un support d'enrouleur plus résistant grâce au renfort rapporté, disposant d'une masse réduite.

L'invention a aussi pour objet un véhicule automobile équipé aux places arrière de ceintures de sécurité disposant chacune d'un enrouleur maintenu par un support d'enrouleur qui est fixé à l'arrière de la caisse de ce véhicule, ce support d'enrouleur présentant l'une quelconque des caractéristiques précédentes.

L'invention sera mieux comprise et d'autres avantages apparaîtront plus clairement à la lecture de la description ci-après donnée à titre d'exemple, en référence aux dessins annexés dans lesquels :
- la figure 1 est une vue intérieure de la caisse nue d'un véhicule, comportant un support d'enrouleur de ceinture de sécurité suivant l'art antérieur ;
- la figure 2 est une vue de ce support comprenant tous les équipements fixés dessus ;
- la figure 3 est une vue de détail de la tablette de ce support, présentant la formation d'une patte de fixation des sièges ;
- la figure 4 est une vue de la caisse nue présentant le dessous de cette tablette déformée après une forte traction sur la ceinture de sécurité ;
- les figures 5 et 6 sont des vues d'un support selon l'invention, comportant un renfort rapporté au-dessus de la tablette, dans deux premiers modes de réalisation de l'invention; et
- les figures 7 et 8 sont des vues similaires d'un support comportant un renfort rapporté en-dessous de la tablette dans deux autres modes de réalisation de l'invention.

Dans le présent texte, les directions sont indiquées en référence à un repère orthonormé XYZ dans lequel X désigne la direction longitudinale avant-arrière du véhicule, orientée vers l'arière du véhicule, Y désigne la direction transversale Y du véhicule, orientée vers la droite du véhicule, et Z désigne la direction verticale orientée vers le haut.

Les notions « avant » et « arrière » sont données en référence au sens de marche classique avant-arrière du véhicule.

Le terme « sensiblement » signifie dans le cadre de l'invention, qu'un léger écart est admis par rapport à une position nominale déterminée. Par exemple « sensiblement transversal » signifie qu'une inclinaison de l'ordre de 5-10° maximale est admise par rapport à une orientation strictement transversale.

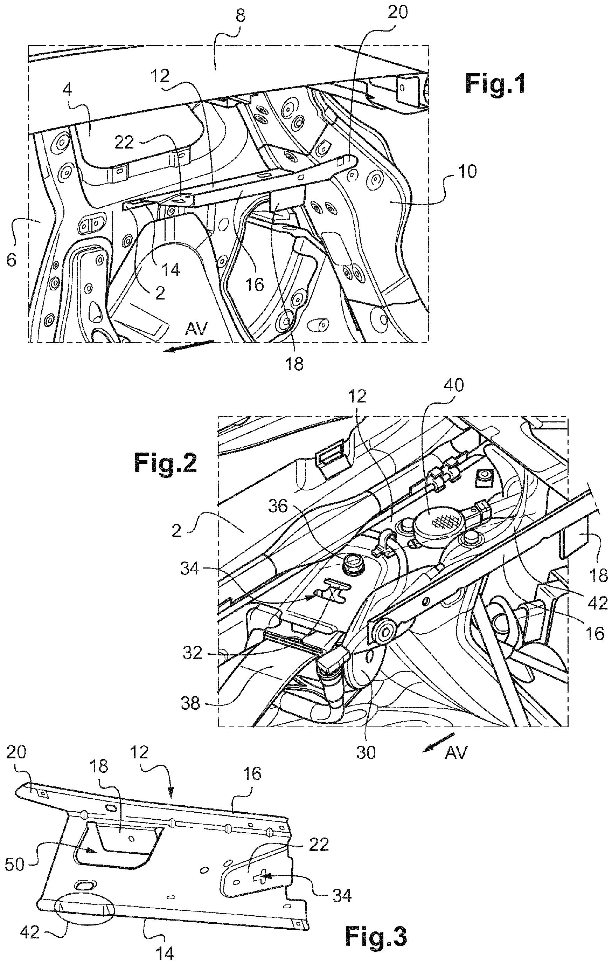

Les figures 1 et 2 présentent dans le coffre à l'intérieur de la caisse d'un véhicule comportant un côté avant indiqué par la flèche « AV », un panneau de doublure de custode 2 qui se termine du côté avant par l'ouverture d'une porte arrière 6 du véhicule, et du côté arrière par le montant latéral 10 de l'ouverture d'un hayon de coffre du véhicule.

Le panneau de doublure de custode 2 comporte dans sa partie supérieure une ouverture pour une fenêtre latérale 4, et reçoit au-dessus le pavillon 8 du véhicule.

Un support d'enrouleur de ceinture de sécurité comporte une tablette 12 formée dans une tôle disposée sensiblement horizontalement, qui présente vers l'extérieur du véhicule un pli latéral dirigé vers le bas 14, fixé par une série de points de soudure au panneau de doublure de custode 2, et vers l'intérieur du véhicule un pli latéral dirigé vers le haut 16, comprenant une partie arrière 20 qui se prolonge au-delà de la tablette pour être fixée sur le côté du montant latéral du hayon 10.

La tablette 12 comporte vers l'avant une forme légèrement en relief 22, recevant en dessous un enrouleur de ceinture de sécurité 30 fixé par une patte 32 traversant une ouverture 34 de la tôle de la tablette, et par une vis 36 traversant cette tôle.

La sangle 38 de l'enrouleur 30 peut exercer en cas d'accident du véhicule, une force de traction importante vers l'avant venant de la masse du passager retenu par cette ceinture.

La tablette comporte de plus sur son côté intérieur une patte 18 tournée vers le bas, qui se trouve sensiblement dans le prolongement du pli latéral intérieur 16, prévue pour recevoir un système de fixation des sièges arrière dans une position escamotée.

La tablette 12 supporte vers l'arrière un buiteur ou émetteur d'alarme 40 (« buzzer » selon la terminologie anglaise) relié au radar de recul disposé à l'arrière du véhicule, ainsi que différents câbles 42 agrafés sur cette tablette.

La tablette 12 est en particulier de manière connue réalisée dans une tôle d'acier d'épaisseur comprise entre 1,7 et 2mm, pour obtenir une certaine résistance des ceintures de sécurité.

La figure 3 détaille la patte de fixation des sièges 18, qui est formée par une découpe sensiblement rectangulaire 50 disposée le long du pli intérieur 16, sur les côtés extérieur, avant et arrière de ce rectangle. La patte de fixation 18 restant attachée à la base du pli intérieur 16, est rabattue vers le bas pour venir dans le prolongement de ce pli intérieur.

La découpe 50 de la tablette 12 forme une ouverture permettant en particulier le passage des câbles 42 au travers de cette tablette.

Le pli extérieur 14 de la tablette 12 comporte dans la zone 52 située en face de la patte de fixation des sièges 18, une petite inclinaison ajustée sur une inclinaison correspondante du panneau de doublure de custode 2, qui présente une direction perpendiculaire à la surface passant en dessous de cette patte afin de permettre un passage des outils de soudure par points.

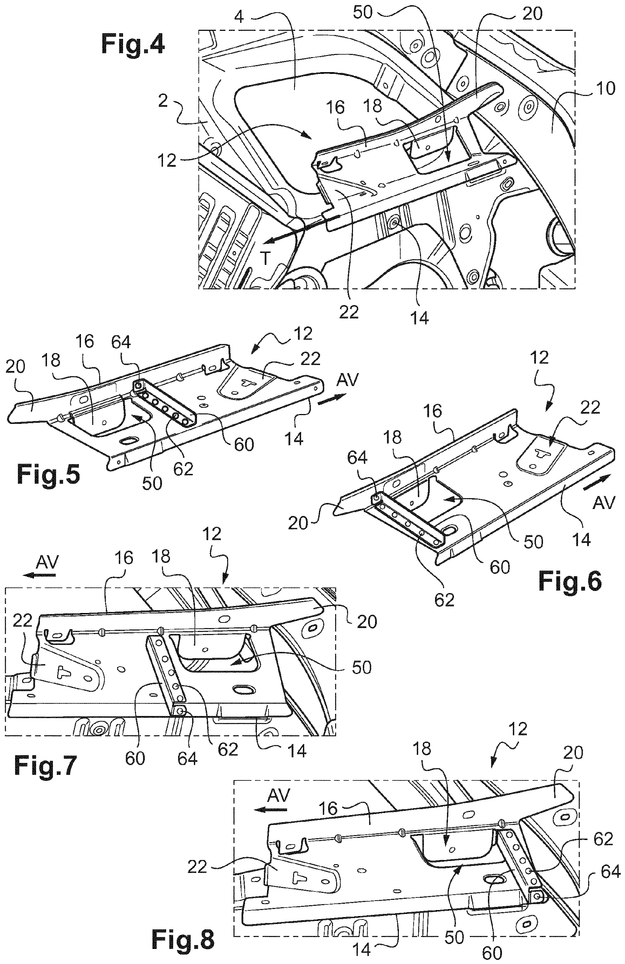

La figure 4 présente la déformation de la tablette 12 sous l'action d'une traction importante T exercée sur la ceinture de sécurité, qui provoque une déformation de cette tablette sous la forme d'un pliage en « V » vers le bas de sa section transversale. Cette déformation peut également être assimilée à une flexion ou courbure de la tablette.

Ce pliage de la tablette 12 génère une traction anormale sur des points de soudure d'extrémité qui commencent à lâcher, entraînant alors la rupture des points suivants par pelage et/ou arrachement de cette liaison.

On notera que la ligne de force de la traction T passe sensiblement par la découpe 50 formant la patte de fixation des sièges 18, ce qui affaiblit notablement la tablette 12 pour ce type d'effort.

Dans un premier mode de réalisation de l'invention illustré à la figure 5, un renfort 60 est disposé au milieu de la face supérieure de la tablette 12, juste en avant de la découpe 50. Ce renfort a la forme générale d'un profilé ou d'une cornière s'étendant sensiblement suivant la direction transversale Y du véhicule. Ce profilé a une section transversale (considéré localement c'est-à-dire dans un plan sensiblement parallèle au plan XZ du véhicule) ayant la forme générale d'un L. Ce renfort est également assimilé à une équerre. Le renfort est réalisé dans une tôle comportant un pliage longitudinal 62, qui départage deux branches du L disposées perpendiculairement l'une à l'autre. L'une des branches est fixée à plat au-dessus de cette tablette 12 par une série de points de soudure répartis sur la longueur du renfort 60. Le renfort 60 comporte également un pliage d'extrémité 64 fixé à plat sur le pli intérieur 16 par un point de soudure. Le pliage 62 est dit ici « longitudinal » vis-à-vis de la direction dans laquelle le renfort s'étend principalement. Ce pliage 62 s'étend suivant la même direction que le renfort lui-même, c'est-à-dire suivant la direction sensiblement transversale Y au véhicule.

Dans une variante de réalisation de l'invention, la figure 6 présente un renfort similaire 60 disposé transversalement en arrière de la face supérieure de la tablette 12, juste en arrière de la découpe 50, qui est fixée par son pliage longitudinal 62 au-dessus de cette tablette, et par son pliage d'extrémité 64 sur le pli intérieur 16. La fixation du renfort 60 sur la face supérieure de la tablette 12 est réalisée par points de soudure de la même façon que dans le premier mode de réalisation.

Dans une autre variante de réalisation de l'invention, la figure 7 présente un renfort similaire 60 disposée transversalement au milieu de la face inférieure de la tablette 12, qui est fixé par son pliage longitudinal 62 en dessous de cette tablette, et par son pliage d'extrémité 64 sur le pli extérieur 14. La fixation du renfort 60 sur la face inférieure de la tablette 12 est réalisée par points de soudure de la même façon que dans le premier mode de réalisation.

Dans une autre variante de réalisation de l'invention, la figure 8 présente un renfort similaire 60 disposée transversalement en arrière de la face inférieure de la tablette 12, qui est fixé par son pliage longitudinal 62 en dessous de cette tablette, et par son pliage d'extrémité 64 sur le pli extérieur 14. La fixation du renfort 60 sur la face inférieure de la tablette 12 est réalisée par points de soudure de la même façon que dans le premier mode de réalisation.

D'une manière générale, le renfort 60 réalisé sous la forme d'un profilé en tôle pliée constitue un moyen simple et économique qui renforce de manière importante la tablette 12, en particulier pour éviter une courbure de sa section transversale lors d'une traction importante sur la ceinture de sécurité.

On notera que ce renfort 60 peut facilement être ajouté à différents endroits sur la tablette 12, correspondant à des positions longitudinales différentes, la tablette conserve par ailleurs une forme identique. Toutefois grâce à ce renfort 60, on peut en particulier réaliser la tablette 12 dans une tôle plus fine, présentant par exemple une épaisseur de 1,5mm, qui permet d'obtenir à la fois une résistance à la traction de la ceinture de sécurité suivant les tests imposés par les normes, et un gain global en masse.

On notera de plus que pour ces quatre dernières dispositions du renfort 60, celui-ci est fixé à proximité de la découpe 50 formant la patte 18, un peu en avant ou en arrière de cette découpe, ce qui renforce de manière importante le contour de cette découpe.

Par ailleurs le renfort 60 renforçant la tablette 12 permet d'obtenir une résistance suffisante de cette tablette comportant des ouvertures de grandes dimensions, notamment la découpe 50 réalisant de manière économique la patte de fixation des sièges 18 sans ajouter de tôle complémentaire.

## Revendications

1. Support d'enrouleur de ceinture de sécurité arrière d'un véhicule automobile, comprenant une tablette (12) formée par une tôle allongée suivant la direction longitudinale du véhicule, prévue pour être disposée sensiblement horizontalement dans ce véhicule, comportant un pli latéral extérieur (14) prévu pour être fixé sur une tôle de doublure de custode (2) de la caisse de ce véhicule, une partie arrière (20) prévue pour être fixée sur un montant arrière (10) de cette caisse, et des perçages (34) de fixation de l'enrouleur (30), **caractérisé en ce qu'**il comporte un renfort rapporté (60) qui est fixé sur la tablette (12), et **en ce que** la tablette (12) comporte sur le côté latéral intérieur une patte sensiblement verticale (18) formée par une découpe de cette tablette (50), prévue pour recevoir un organe de commande de rabattage d'un siège ou dossier arrière du véhicule.

2. Support d'enrouleur selon la revendication 1, **caractérisé en ce que** le renfort rapporté (60) est fixé sensiblement transversalement sur la tablette (12).

3. Support d'enrouleur selon la revendication 1 ou 2, **caractérisé en ce que** le renfort rapporté (60) a la forme générale d'un profilé ou d'une cornière à section transversale en L dont une branche est soudée par points sur la tablette (12).

4. Support d'enrouleur selon la revendication 3, **caractérisé en ce que** le renfort rapporté (60) comporte une aile longitudinale pliée (62).

5. Support d'enrouleur selon la revendication 3 ou 4, **caractérisé en ce que** le renfort rapporté (60) comporte une extrémité pliée (64) qui est fixée sur un pli (14, 16) de la tablette (12).

6. Support d'enrouleur selon l'une quelconque des revendication 1 à 5, **caractérisé en ce que** la patte (18) est disposée sensiblement dans le plan d'un pli latéral intérieur (16) de la tablette (12).

7. Support d'enrouleur selon l'une quelconque des revendications 1 à 6, **caractérisé en ce que** le renfort rapporté (60) est disposé à proximité de la découpe de la tablette (50), un peu en avant ou en arrière de cette découpe.

8. Support d'enrouleur selon l'une quelconque des revendications précédentes, **caractérisé en ce que** la tablette (12) est réalisée dans une tôle d'acier d'épaisseur 1,5mm.

9. Véhicule automobile équipé aux places arrière de ceintures de sécurité disposant chacune d'un enrouleur (30) maintenu par un support d'enrouleur qui est fixé à l'arrière de la caisse du véhicule, **caractérisé en ce que** ce support d'enrouleur est réalisé suivant l'une quelconque des revendications précédentes.

## Patentansprüche

1. Halterung eines hinteren Sicherheitsgurtaufrollers eines Kraftfahrzeugs, die eine Platte (12) enthält, die von einem sich in Längsrichtung des Fahrzeugs erstreckenden Blech gebildet wird, die vorgesehen ist, um im Wesentlichen waagrecht in diesem Fahrzeug angeordnet zu werden, die eine äußere seitliche Abkantung (14), die vorgesehen ist, an einem Verkleidungsblech eines hinteren Seitenfensters (2) der Karosserie dieses Fahrzeugs befestigt zu werden, einen hinteren Teil (20), der vorgesehen ist, an einer hinteren Säule (10) dieser Karosserie befestigt zu werden, und Bohrungen (34) zur Befestigung des Aufrollers (30) aufweist, **dadurch gekennzeichnet, dass** sie eine angesetzte Verstärkung (60) aufweist, die an der Platte (12) befestigt ist, und dass die Platte (12) auf der seitlichen Innenseite eine im Wesentlichen senkrechte Lasche (18) aufweist, die von einem Ausschnitt (50) dieser Platte gebildet wird, vorgesehen, um ein Steuerelement des Umklappens eines hinteren Sitzes oder einer hinteren Rücklehne des Fahrzeugs aufzunehmen.

2. Aufrollerhalterung nach Anspruch 1, **dadurch gekennzeichnet, dass** die angesetzte Verstärkung (60) im Wesentlichen quer an der Platte (12) befestigt ist.

3. Aufrollerhalterung nach Anspruch 1 oder 2, **dadurch gekennzeichnet, dass** die angesetzte Verstärkung (60) die allgemeine Form eines Profilteils oder eines Winkeleisens mit L-förmigem Querschnitt hat, von dem ein Schenkel punktweise an die Platte (12) geschweißt ist.

4. Aufrollerhalterung nach Anspruch 3, **dadurch gekennzeichnet, dass** die angesetzte Verstärkung (60) einen umgebogenen Längsflügel (62) aufweist.

5. Aufrollerhalterung nach Anspruch 3 oder 4, **dadurch gekennzeichnet, dass** die angesetzte Verstärkung (60) ein umgebogenes Ende (64) aufweist, das an einer Abkantung (14, 16) der Platte (12) befestigt ist.

6. Aufrollerhalterung nach einem der Ansprüche 1 bis 5, **dadurch gekennzeichnet, dass** die Lasche (18) im Wesentlichen in der Ebene einer inneren seitlichen Abkantung (16) der Platte (12) angeordnet ist.

7. Aufrollerhalterung nach einem der Ansprüche 1 bis 6, **dadurch gekennzeichnet, dass** die angesetzte Verstärkung (60) in der Nähe des Ausschnitts der Platte (50), etwas vor oder hinter diesem Ausschnitt, angeordnet ist.

8. Aufrollerhalterung nach einem der vorhergehenden Ansprüche, **dadurch gekennzeichnet, dass** die Platte (12) aus einem Stahlblech einer Dicke von 1,5 mm hergestellt ist.

9. Kraftfahrzeug, das auf den hinteren Sitzen mit Sicherheitsgurten ausgerüstet ist, die je über einen Aufroller (30) verfügen, der von einer Aufrollerhalterung gehalten wird, die an der Rückseite der Karosserie des Fahrzeugs befestigt ist, **dadurch gekennzeichnet, dass** diese Aufrollerhalterung nach einem der vorhergehenden Ansprüche hergestellt wird.

## Claims

1. Winder support for rear safety belt of a motor vehicle, comprising a panel (12) which is formed by a metal sheet which is elongate in the longitudinal direction of the vehicle and which is provided to be arranged substantially horizontally in this vehicle, comprising an outer lateral fold (14) which is provided to be fixed to a metal sheet of the lining of the rear quarter panel (2) of the body of this vehicle, a rear portion (20) which is provided to be fixed to a rear pillar (10) of this body, and bores (34) for fixing the winder (30), **characterized in that** it comprises an attached reinforcement (60) which is fixed to the panel (12), and **in that** the panel (12) comprises on the inner lateral side a substantially vertical flap (18) which is formed by a cutout from this panel (50), which cutout is provided to receive a member for controlling the folding of a rear backrest or seat of the vehicle.

2. Winder support according to Claim 1, **characterized in that** the attached reinforcement (60) is fixed substantially transversely to the panel (12).

3. Winder support according to Claim 1 or Claim 2, **characterized in that** the attached reinforcement (60) is generally in the form of a profile-member or an angled member with an L-like cross section, one branch of which is spot-welded to the panel (12).

4. Winder support according to Claim 3, **characterized in that** the attached reinforcement (60) comprises a folded longitudinal flange (62).

5. Winder support according to Claim 3 or 4, **characterized in that** the attached reinforcement (60) comprises a folded end (64) which is fixed to a fold (14, 16) of the panel (12).

6. Winder support according to any one of Claims 1 to 5, **characterized in that** the flap (18) is arranged substantially in the plane of an inner lateral fold (16) of the panel (12).

7. Winder support according to any one of Claims 1 to 6, **characterized in that** the attached reinforcement (60) is arranged near the cutout of the panel (50), slightly in front of or behind this cutout.

8. Winder support according to any one of the preceding Claims, **characterized in that** the panel (12) is produced from a steel sheet having a thickness of 1.5 mm.

9. Motor vehicle which is provided in the rear positions with safety belts each having a winder (30) which is maintained by a winder support which is fixed to the rear of the body of the vehicle, **characterized in that** this winder support is constructed according to any one of the preceding Claims.
